# EUROPEAN PATENT APPLICATION

(11) **EP 1 970 844 A2**
(43) Date of publication of application: **17.09.2008**
(21) Application number: 08102557.9
(22) Date of filing: 12.03.2008
(51) Int. Cl.: G06Q 10/00

(54) **Method and system for metamodeling using dynamic ontology objects**

(30) Priority: 15.03.2007 US 686835
(71) Applicant: Honeywell International Inc., Morristown NJ 07960 (US)
(72) Inventor: Oglesby, David V., Brooklyn Center, MN 55429 (US); Schewe, Jon P., Maple Grove, MN 55369 (US); Engstrom, Eric, Shoreview, MN 55126 (US); Schloegel, Kirk A., Independence, MN 55359 (US); Shackleton, Hazel S., Minneapolis, MN 55418 (US)
(74) Representative: Buckley, Guy Julian

(57) **Abstract**

A system and method for providing ontology objects for use in a metamodeling environment is disclosed herein. The method comprises (a) providing a framework for creating a metamodel, wherein the metamodel comprises one or more entities, relationships, and semantics and the framework accepts input from a user to create the entities, relationships, and semantics, (b) generating ontology objects, wherein the ontology objects comprise source code for one or more classes, and wherein each class corresponds to one of the entities; and (c) compiling the source code. Further, the method may comprise detecting that a change has been made to the metamodel, updating the ontology objects to reflect the change to the metamodel, wherein updating the ontology objects comprises generating new source code for one or more classes; and compiling the new source code.

## Description

### BACKGROUND OF THE INVENTION

### 1. Field of the Invention

The present invention relates to the field of metamodeling and, more specifically, to dynamic ontology objects that can be used to describe the semantics of a metamodel.

### 2. Description of the Related Art

Metamodeling environments allow modelers to simulate complex scenarios with high-level modeling tools. Metamodeling environments provide the user with the basic tools with which the user can create a metamodel. The user-defined metamodel, which may also be referred to as an ontology, can then be processed by the metamodeling environment to generate an interface that can be used to create various instance models. Often, metamodeling environments provide a visual language, allowing modelers to create detailed models, without requiring low-level knowledge of the underlying classes that make up the model.

Existing metamodeling environments typically may be used to create domain-specific modeling tools. A domain is the particular area where a model can be used to solve problems or model scenarios. For example, metamodeling tools may provide an environment for conveniently defining the entities, relationships between those entities, and the behavior of those entities and relationships that make up an ontology. Thus, by defining the ontology, the user has created a domain-specific language. The metamodeling environment can then create tools that can be used to create models which comply with the domain-specific language, and which may be referred to as instance models.

Metamodels include syntax and semantics. The syntax defines the legal entities or components of a model, including their defined properties, as well as the legal relationships between those entities. The semantics specify the interpretation or behavior of the entities and relationships of a metamodel. Put another way, the syntax is the basic building blocks and the rules for construction, while the semantics are the rules for interpretation. Metamodeling environments generally allow the user to define the syntax (e.g. properties, relationships, etc.) for a metamodel. In general, defining the semantics of a metamodel requires some degree of programming. Currently, this code must use the data structures of the modeling tool that underlie its models. These data structures are not standard and must be learned by any user wishing to create a metamodel. This constitutes a barrier to user-created modeling tools. The objective of metamodeling is to allow end-users to create their own languages and supporting tools. To this end, the semantics should be defined in terms of the language being created rather than require the user to learn a new application programming interface (API).

The metamodel, comprising the user-defined syntax and semantics, is compiled or interpreted to create a domain-specific modeling language and supporting tools. In turn, this language can be used to create domain-specific instance models.

Unfortunately, changes to a metamodel may have the effect of substituting a new code base, in place of the original one. Therefore, instance models based upon the original domain-specific model may be invalid, as they are tied to the structure of the original metamodel. Therefore, the modeler may be forced to recreate instance models whenever changes are made to the underlying metamodel. Alternatively, the modeler may be forced to create an import tool and import the instance models into the new metamodel.

### SUMMARY OF THE INVENTION

Accordingly, a method and metamodeling environment using ontology objects are disclosed herein. Ontology objects are sets of software interfaces and implementations of these interfaces that mirror the ontology of a metamodel and provide foundational semantic support to users (e.g., support for the creation of instance models). In addition, they can be used to create code generators, analysis routines, even external programs that query and interact with instance models expressed in the domain. Most importantly, ontology objects are available to the metamodeler to define the semantics of the metamodel. Instead of coding against a set of unfamiliar libraries, the semantics can be defined using the entities of the ontology itself.

In one aspect, a method for creating an instance model is disclosed. The method comprises (a) creating a metamodel, wherein the metamodel comprises domain-specific entities, relationships between the entities, and a description of the domain semantics, (b) accessing ontology objects, wherein the ontology objects are generated as the metamodel is created, and wherein the ontology objects correspond to the entities and capture their properties and relationships, and (c) creating the instance model using the ontology objects. The method may further comprise modifying the metamodel and regenerating as necessary the corresponding ontology objects.

In another aspect, a method for providing ontology objects for use in a modeling environment is disclosed. The method comprises (a) providing a framework for creating a metamodel, wherein the metamodel comprises one or more entities, relationships and domain semantics, and the framework accepts input from a user to create the entities and relationships, (b) dynamically generating ontology objects, wherein the ontology objects comprise source code for one or more classes, and wherein each class corresponds to one of the entities; (c) supporting the specification of semantics using ontology objects; and (d) compiling the source code. Further, the method may comprise detecting that a change has been made to the metamodel, updating the ontology objects to reflect the change to the metamodel, wherein updating the ontology objects comprises generating new source code for one or more classes; updating user specified semantics that reference the changed ontology objects constructs, wherein updating the semantics comprises modifying object references and method calls; and compiling the new source code.

The metamodeling environment may include an interface for creating and modifying at least one metamodel, wherein the metamodel comprises a plurality of entities, one or more relationships between the entities, and domain semantics. The interface may accept user input to define the plurality of entities, the relationships between the entities, and the domain semantics. The metamodeling environment may also include program logic that is executable to dynamically maintain a plurality of ontology objects, wherein the ontology objects correspond to the defined entities and the relationships between the entities. Further, the metamodeling environment may include an interface that calls methods on the ontology objects to create one or more instance models. In some embodiments the interface may be a graphical user interface (GUI) or an application programming interface (API) against which other programs may be written.

The ontology objects may comprise a plurality of object-oriented classes in a programming language such as C++ or Java. Each class may correspond to an entity from the user-defined metamodel. Each entity may be defined as having a plurality of properties, and instance model data may capture the values of these properties for all instances. Ontology object classes may include at least one method. The methods may be called to create, delete, and modify instance model data. In one embodiment, the instance model data is comprised of instances of the ontology objects classes. In another embodiment, the instance model data is comprised of data in a data structure. In yet another embodiment, the instance model data is comprised of data in a database.

### BRIEF DESCRIPTION OF THE DRAWINGS

Figure 1A is a simplified block diagram depicting an example metamodel;
Figure 1B is pseudo code for example semantics for a metamodel;
Figure 2 is a simplified block diagram depicting an example metamodel, an example set of ontology objects and corresponding methods;
Figure 3 is pseudo code for example semantics for a metamodel, which are defined on ontology objects;
Figure 4 is flow chart illustrating an example method for creating an instance model using ontology objects;
Figure 5 is a flow chart illustrating an example method for creating and maintaining ontology objects that can be used in creating instance models; and
Figure 6A is a simplified block diagram depicting an example metamodel, an example set of ontology objects, and an example instance model;
Figure 6B is another simplified block diagram depicting an example metamodel, an example set of ontology objects, and an example instance model.

### DETAILED DESCRIPTION OF THE INVENTION

Dynamic ontology objects capture and maintain semantics that are consistent with the specifications of a user-defined metamodel. In practice, this may be accomplished by generating (and compiling, if necessary) program code for ontology objects whenever a user modifies a metamodel. Accordingly, an exemplary metamodeling environment provides tools for creating a metamodel. The tools provided by the metamodeling environment can be used to define an ontology that consists of entities, properties of entities, relationships among those entities, and the behavior of those entities. The metamodeling environment also provides a mechanism that automatically creates ontology objects that reflect the user-defined ontology. In particular, the tool may create dynamic ontology objects consisting of classes that correspond to the entities that make up the user-defined ontology. These classes may include constructors to create and initialize instance model instances of the metamodel entities and destructors to delete instances from the instance model and perform necessary cleanup. They may also have methods that create, delete, and modify the instance model data that correspond to properties. Further, they may also capture the relationships between the user-defined entities. In particular, the classes may include further methods that create, delete, and modify the instance model data that capture the relationships between the entities.

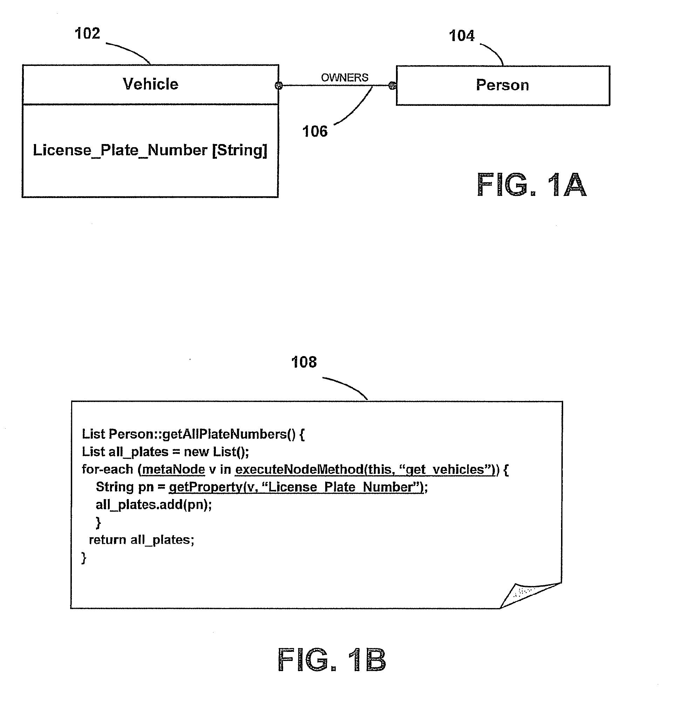

Figure 1A depicts a user-defined model created with a metamodeling tool. The model includes two entities: a "Vehicle" entity 102, and a "Person" entity 104. The Vehicle entity 102 also has a License_Plate_Number[String] property. This property is a String of characters, numbers, and/or symbols representing the license plate number for a given vehicle. Figure 1 also includes an OWNERS relationship 106 between Vehicle entity 102 and Person entity 104. This relationship defines a person as an owner of a given vehicle.

Relationships between various entities in a user-defined metamodel may be of various types. For example, relationships may be defined to have a multiplicity of one-to-one, one-to-many, many-to-one, or many-to-many. A one-to-many relationship means that an instance of the first entity may be related in the defined manner to multiple instances of a second type of entity, but each instance of the second type of entity may only be related with a single instance of the first type of entity. A one-to-one relationship means that an instance of a first entity may be related in the defined manner to only one instance of a second entity, and vice versa. Many-to-one and many-to-many relationships are similarly defined. For instance, OWNERS relationship 106 is a many-to-many relationship, indicating that one person can own multiple vehicles, and one vehicle can have multiple owners.

By creating a metamodel structure (i.e. entities 102, 104, and relationship 106, between the entities), a user defines the syntax of the metamodel. A user defines the semantics by writing programming code. Figure 1B shows an example of semantics defined without using ontology objects. More specifically, by way of example, Figure 1B shows pseudo code 108 for a method (i.e. semantics) for the person entity.

Pseudo code 108 defines a method for retrieving the license plate numbers of all vehicles owned by a particular person. The logic of this method is fairly simple, iterating through each vehicle a person owns and retrieving the license plate number for that vehicle. However, creating this method may not be as simple, as without ontology objects, all references to the metamodel entities and relationships are defined in the language of the metamodeling tool, not in the language of the metamodel. More specifically, executeNodeMethod and getProperty are methods that are specific to the metamodeling tool, and the user typically has no knowledge of such methods. As these methods are useful for programming against a metamodel, it is a desirable for the user to have access to them. Ontology objects can provide access to such methods, without requiring any specific knowledge of the methods. Also, note that the getAllPlateNumbers method also relies on particular tool-specific classes (e.g. metaNode) that must be defined in the language of the metamodeling tool.

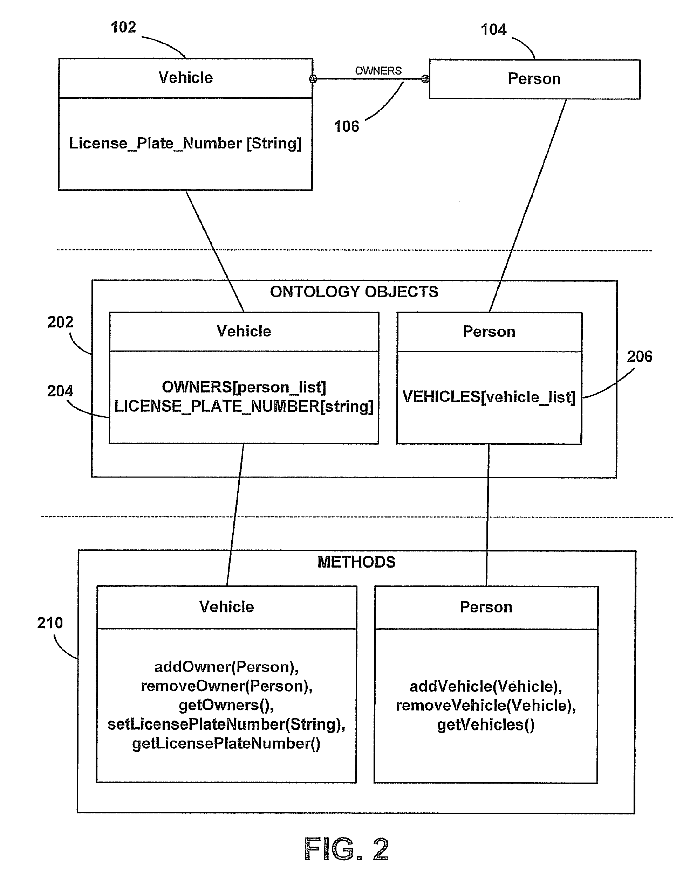

Ontology objects allow semantics to be created concurrently with the syntax by allowing a user to define the semantics using the syntax they are creating, rather than the syntax of the modeling tool (i.e. the language of, or methods specific to, the metamodeling tool). As shown in Figure 2, an exemplary metamodeling tool may dynamically create ontology objects 202 that correspond to a user-defined metamodel. Similar to Figure 1, the metamodel includes a Vehicle entity 102 and a Person entity 104, as well as the OWNERS relationship 106 between Vehicle entity 102 and Person entity 104. The ontology objects 202 capture the syntax and semantics of the metamodel. Ontology objects 202 may then be used to create one or more instance models.

Each ontology object 202 may take the form of a class that is generated by the metamodeling tool, whenever the corresponding entity is created or updated by the user. Thus, ontology objects 202 include a Vehicle class 204 and a Person class 206. Variables will be described using the following format, with the name of the variable in capital letters and the type of the variable in bracketed lower case letters: VARIABLE_NAME[variable_type].

Classes may capture relationships with variables and/or methods. For example, the OWNERS relationship 106 may be captured by the VEHICLES[vehicle_list] variable for the Person class 206 and the OWNERS[person_list] instance variable for the Vehicle class 204. By defining these variables the many-to-many OWNERS relationship 106 is captured by ontology objects 202. Specifically, the many-to-many relationship is captured because the Person class 206 includes a variable that represents a list of vehicles (e.g. VEHICLES[vehicle_list]) that are owned by that person. Likewise, the Vehicle class includes a variable that represents the people (e.g. OWNERS[person_list]) that owns that vehicle.

In one aspect, the ontology objects comprise methods that provide foundational modeling semantics that, for example, maintain consistency between these instance variables. For example, specifying a new owner for a Vehicle using the addOwner(Person) method will add that vehicle to the VEHICLES[vehicle_list] variable on the Person object and add the Person to the OWNERS[person_list] variable on the Vehicle object. To facilitate this functionality, class methods 210 are generated as an interface of the ontology objects. Further, implementations of these methods are generated as components of the ontology objects.

Ontology object interfaces and implementations are generated that facilitate the creation of instance models. These may be associated with classes 204, 206 and provide various functionality for these entities. In particular, methods may be created that provide access to the instance model data, allowing the semantics to be defined in terms of the ontology objects. In the examples methods will be referenced using the following notation, which uses parentheses rather than brackets, as are used in reference to variables: classMethod(InputType).

In one aspect, methods may be provided for defining, accessing, and/or manipulating instance model data. For example, an addOwner(Person), removeOwner(Person), and getOwners() method may be generated in accord with an OWNERS[person_list] variable of Vehicle class. The addOwner(Person), removeOwner(Person), and getOwners() methods may allow a user to specify, delete, and/or retrieve the vehicle's owner or owners for an instance of Vehicle class 204. Similar functionality may be provided by the setLicensePlateNumber(String) and getLicensePlateNumber() methods for the LICENSE_PLATE_NUMBER[string] variable, and by the addVehicle(Vehicle), removeVehicle(Vehicle), and getVehicles() methods for the VEHICLES[vehicle_list] variable of Person class 206.

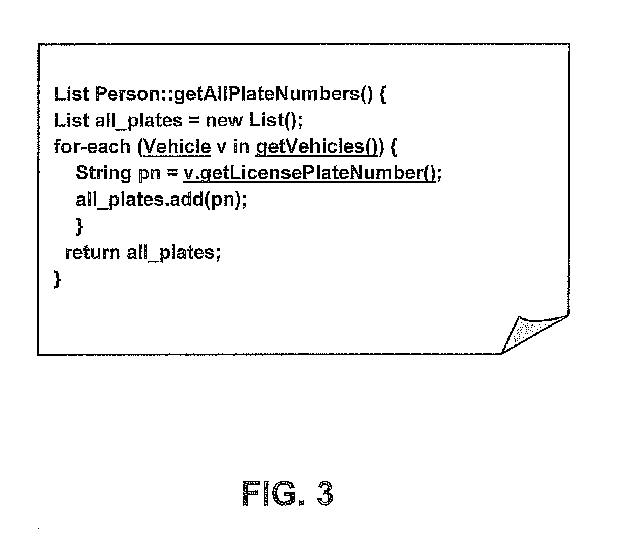

In one aspect, user-defined methods may be supported in addition to methods automatically generated from relationships or properties. A user may associate methods with metamodel entities. These methods will appear in the interfaces that correspond to those entities. The implementation of these methods may be defined using ontology objects. Figure 3 shows pseudo code for a user-defined method on ontology objects 202. In particular, pseudo code 300 is for a method on the Person class 206. This method returns the license plate numbers for all vehicles owned by a particular person. This method provides the similar functionality as the method or semantics defined by the pseudo code of Figure 1B. However, pseudo code 300 is defined using ontology objects rather than using the language of the metamodeling tool. More specifically, the getVehicles() and getLicensePlateNumber() methods, which are defined on the Person class and Vehicle class respectively, are utilized instead of executeNodeMethod(...) and getProperty(...), which are specific to the metamodeling tool itself. Thus, the getAllPlateNumbers() method that defines new metamodel semantics can be created in the syntax of the metamodel concurrent to that syntax being created.

In one aspect, ontology objects may be used by the metamodel tool framework to constrain, guide, or make suggestions in support to users in defining new semantic code. This can be implemented by means of auto-completion and similar mechanisms that are well known in the art in Integrated Development Environments.

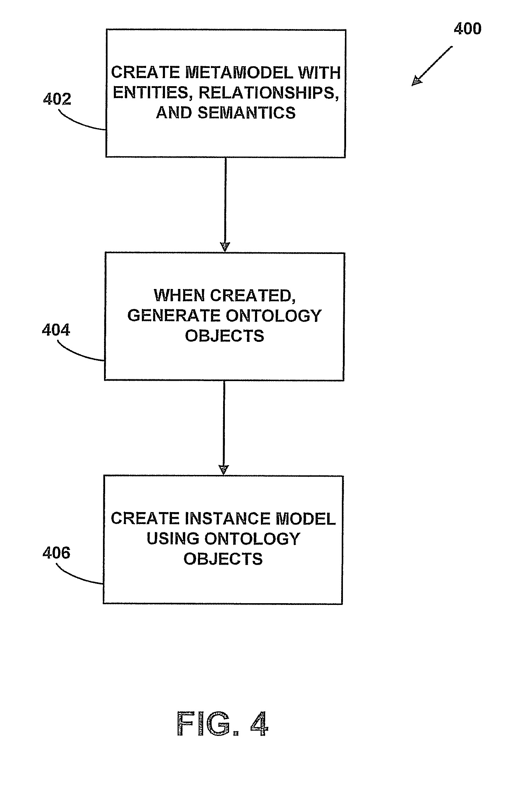

Figure 4 is a flow chart depicting an example method 400 for creating an instance model using ontology objects. The method may be carried out by a user within a metamodeling environment. First, a metamodel or ontology is created by defining entities, relationships between the entities, and semantics, as shown by block 402. Next, as the metamodel is created, the metamodeling environment may create ontology objects that correspond to the entities, and capture the relationships between the entities and the semantics of the metamodel, as shown by block 404. The ontology objects can then be used to create an instance model, as shown by block 406.

The metamodel created in block 402 may be created by a user working within a metamodeling environment. The metamodeling environment may provide a framework that allows the user to create the entities, relationships, and behaviors that make up the metamodel.

As a user creates a metamodel, ontology objects are created that reflect the ontology represented by that metamodel. More specifically, a class may be generated for each user-defined entity. Variables and methods on these classes are then generated that (a) capture the relationships between entities and (b) capture the foundational modeling semantics that allow a user to create, access, and manipulate instances of the generated classes. Generation of the ontology objects occurs dynamically, so that this process is transparent to the user creating the model. Ontology objects may be generated on an entity-by-entity basis or in response to a predetermined event. For example, as each entity is created a corresponding class may also be created. These classes may be updated to include appropriate methods and variables as relationships are defined. As an alternative example, the objects may be created in response to an indication that the user has completed the metamodel. After ontology objects are generated, they may be used to extend the ontology further with textual semantic code or create and manage instance model data, as shown by block 406. While the depicted method refers to creating a single instance model, many instance models can be created using the ontology objects from a single metamodel.

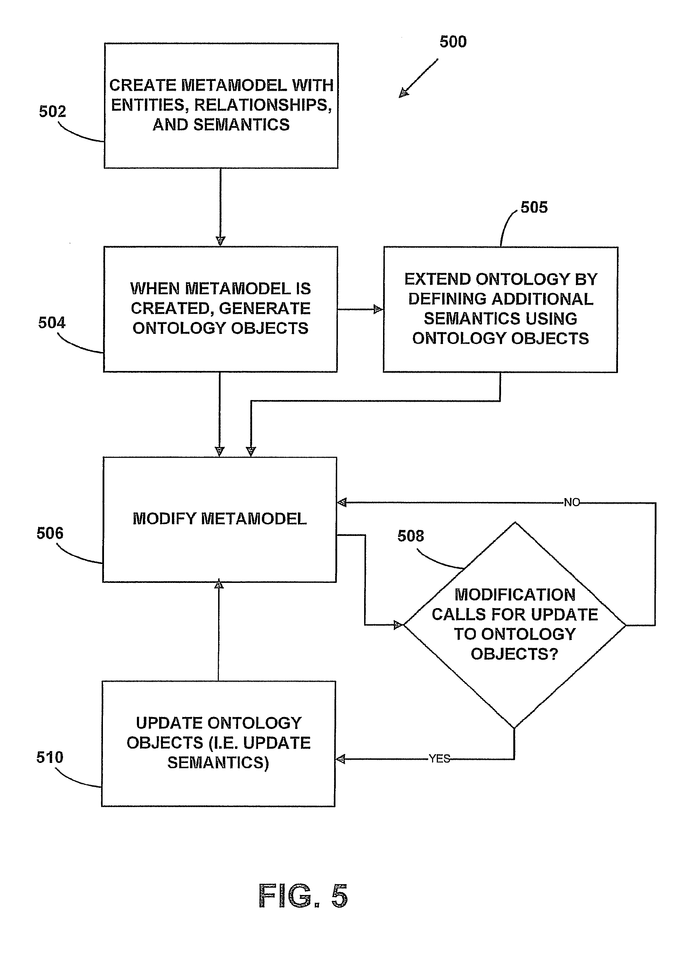

Figure 5 is a flow chart depicting an example method 500 for creating and maintaining ontology objects that can be used in creating instance models. Similar to the method of Figure 4, a metamodel is created, and ontology objects are generated from the ontology of the metamodel, as shown by blocks 502-504. The generated ontology objects can then be used to extend the ontology further with semantics or create instance models, as shown by block 505. Later, after instance models have been created, a modification is made to the underlying metamodel, as shown by block 506. When the metamodel is modified, the ontology may change. In particular, existing entities, properties, and relationships may be modified or deleted and new entities, properties, or relationships may be added.

To maintain ontology objects consistent with the metamodel, updates to the ontology objects may be made. In particular, the semantics may be updated by updating the methods for the classes that make up the ontology objects. Accordingly, when a metamodel is modified, a determination may be made as to whether the modification calls for an update, as shown by block 508. If an update is required, the ontology objects may be updated, as shown by block 510. In order to keep the library of ontology objects consistent with the updated metamodel, new classes, methods, and/or variables may be created and/or existing classes, methods, and/or variables may be modified or deleted.

Changes to the metamodel may be reflected in the corresponding ontology objects as the changes occur. In other words, ontology objects are dynamically updated to reflect changes to the underlying metamodel as they occur. Further, ontology objects are compiled, if compilation is required, as they are created. If necessary, ontology objects, and not the metamodel, are recompiled when a modification to the underlying metamodel is made. This removes the need to recompile a metamodel whenever a change is made to it. Such maintenance of ontology objects may be carried out by a metamodeling environment. In particular, the metamodeling environment may be provided by computer readable program code that provides a graphical user interface (GUI). Alternatively, the environment may provide access through an API to ontology objects at the program-code level (e.g. ontology objects represented by generated C++ or Java classes).

In one aspect, ontology objects may be modified so that existing instance models continue to function without themselves requiring modification. This is because the ontology objects add a layer of an abstraction to the metamodeling process. Rather than creating metamodels and then creating instance models tied directly to the metamodels, ontology objects mirroring the metamodel are created and used as an intermediary to reflect changes in the metamodel, while maintaining a structure that is consistent with previously created instance models.

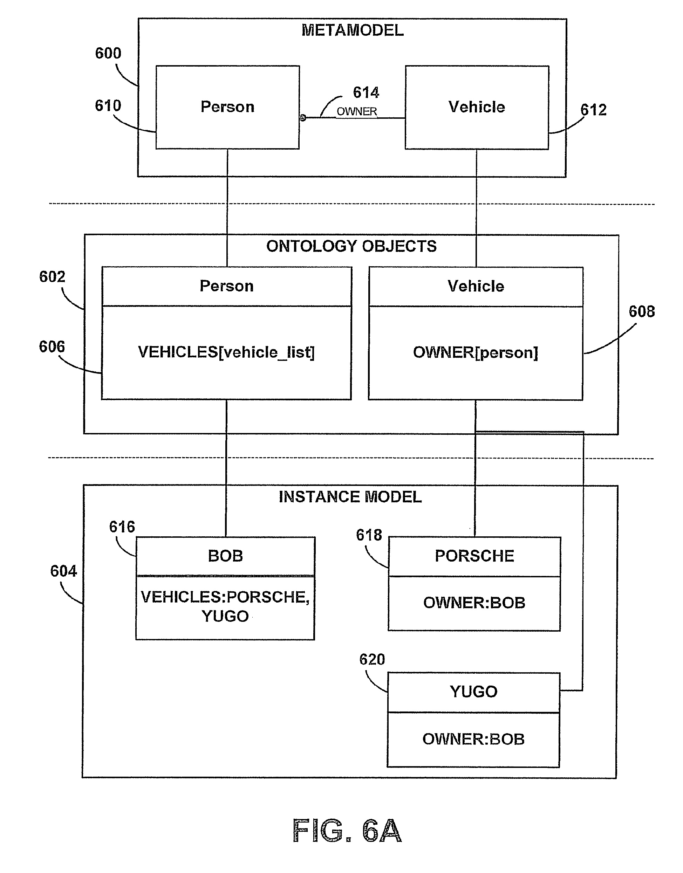

Figure 6A shows an example user-defined metamodel 600. Ontology objects 602 have been created to capture syntax and semantics of metamodel 600. Further, instance model 604 has been created using ontology objects 602. This model captures a many-to-one relationship between vehicles and vehicle owners. This structure represents a model where a person can own multiple vehicles, but a vehicle can be owned by only one person.

Ontology objects 602 mirror metamodel 600, and therefore include a Person class 606 and a Vehicle class 608, which capture the Person entity 610 and the Vehicle entity 612, respectively. To capture the OWNER relationship 614, the Person class 606 includes a VEHICLES[vehicle_list] variable and the Vehicle class includes an OWNER[person] instance variable.

Instance model 604 includes an instance of the Person class 616, as well as two instances of the Vehicle class 618, 620. The user may define values for each property of each instance, such as the name of a person (e.g. Bob) or the brand of a vehicle (e.g. Porsche or Yugo). The instance model may also be defined to specify OWNER relationships indicating that Bob owns a Porsche and a Yugo. These relationships can be captured by setting values of instance variables for the class instances 616-620. The instance of the Person class 616 would set the value of the VEHICLES[vehicle_list] to be a list referencing the instances of the Vehicle class 618, 620 (indicating Bob owns the Porsche and the Yugo). The instance of the Person class 616 would be set as the value for the OWNER[person] variable for instance of the Vehicle class 618 (indicating the Porsche is owned by Bob). The instance of the Person class 616 would be set as the value for the OWNER[person] variable instance of the Vehicle class 620 (indicating the Yugo is owned by Bob). These relationships can be captured in the language of the metamodel by calling ontology object methods Bob.addVehicle(Porsche) and Yugo.setOwner(Bob).

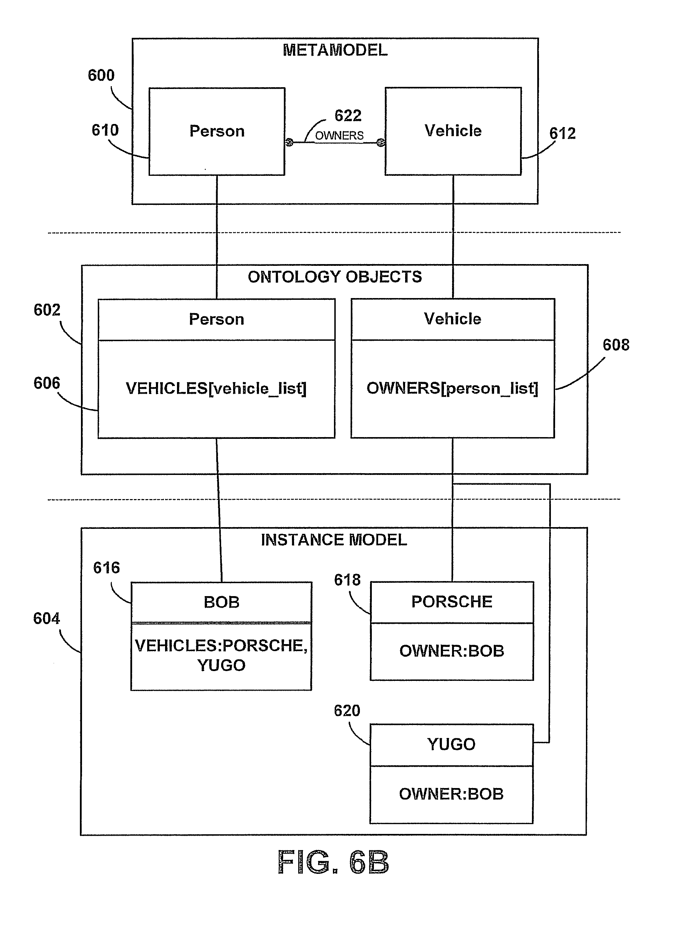

In Figure 6B, metamodel 600 has been modified so that the OWNER relationship 614 between Person entity 610 and Vehicle entity 612, has been modified to be many-to-many OWNERS relationship 622. This structure represents a model where a person can own multiple vehicles and a vehicle can be owned by multiple people. To capture the many-to-many OWNERS relationship 622 the Person class 606 includes a VEHICLES[vehicle_list] instance variable and the Vehicle class 608 now includes an OWNERS[person_list] variable. More specifically, the OWNERS[person_list] variable now references a list of instances of the Person class, rather than a single instance of the Person class. This reflects the many-to-many OWNERS relationship by allowing instance models to include vehicles with multiple owners.

Note that ontology object interfaces and implementations are generally updated only when the related metamodel entity is modified or an update is required because of a modified relationship involving the related entity. For example a previously generated setOwner(Person) method that sets the value for the OWNER[person] variable, may be replaced with a new addOwner(Person) method that adds a person to the list of vehicles contained in the OWNERS[person_list] variable. Accordingly, the change to the many-to-many OWNERS relationship 622, calls for the Vehicle class to be updated. In particular, the OWNER variable of Vehicle class 608 is changed to a OWNERS[person_list] variable, which represents a list of Person instances rather than a singular instance. In general, adding a new attribute to metamodel 600, may result in an update to an appropriate ontology object, such as a Java or C++ class (or if no appropriate ontology object exists, the creation of an appropriate ontology object). For example, if a YEAR property (not shown) is added to Vehicle entity 612, Vehicle class 608 would be updated to include an instance variable storing the year. Further, methods might be added to create, access, and/or modify the variable for a particular instance of the class. On the other hand, some entities may require no change after a modification to the underlying metamodel. For example, the Person class 606 requires no change to reflect the many-to-many OWNERS relationship 622 because the model previously allowed a person to own multiple vehicles. Therefore, unlike the Vehicle class 608, the Person class 606 may not be updated after adding OWNERS relationship 622.

In one aspect, ontology objects may take the form of executable program code (e.g. C++, Java, etc.) that is generated to reflect a user-defined ontology. Code for a class (e.g. a C++ or Java class) may be generated for each entity as the entity is added to the metamodel by a user. The code for the class may be generated "on the fly". An example metamodeling environment may monitor (e.g. continuously or periodically) user-defined metamodels, and when a model changes, generate code for classes that captures the change, and then compile the code. This assures that up-to-date ontology objects are continuously available. Note that any code that references the classes may require an update. If the tool is aware of this code (e.g., if the code has been developed with the metamodeling environment or if the user has registered the externally developed code with the metamodeling environment), it can perform the repairs itself or prompt the user to do so.

Instance models can now be created with the new ontology including many-to-many OWNERS relationships. Further, because the change was isolated within the ontology object methods, existing instance models, such as instance model 604, may persist and remain functional. These changes may affect any code that calls the previous ontology object method, including user-defined code specifying additional semantics in the metamodel. However, these changes can be managed by well known means. For example, the framework can either propagate the necessary changes automatically or notify the user of the problem. One method to address this situation is to deprecate the old method and change its behavior to call the other two as appropriate.

While exemplary embodiments have been described, persons of skill in the art will appreciate that variations may be made without departure from the scope and spirit of the invention. This true scope and spirit is defined by the appended claims, which may be interpreted in light of the foregoing.

## Claims

1. A method for creating an instance model, the method comprising:
creating a metamodel, wherein the metamodel comprises entities and relationships between the entities and a description of the semantics;
accessing ontology objects, wherein the ontology objects are generated as the metamodel is created, and wherein the ontology objects correspond to the entities and capture the relationships between the entities;
creating the instance model using the ontology objects;
storing the instance model in data storage where it can be retrieved for use in a metamodeling environment.

2. The method of claim 1 further comprising:
modifying the metamodel; and
re-generating ontology objects that correspond to the modified entities and relationships between the entities.

3. A method for providing ontology objects for use in a modeling environment, the method comprising:
providing a framework for creating a metamodel, wherein the metamodel comprises one or more entities, relationships, and domain semantics, and the framework accepts input from a user to create the entities;
generating ontology objects, wherein the ontology objects comprise source code for one or more classes, and wherein each class corresponds to one of the entities; and
compiling the source code if necessary.

4. The method of claim 3, further comprising:
detecting that a change has been made to the metamodel;
updating the ontology objects to reflect the change to the metamodel, wherein updating the ontology objects comprises generating new source code for one or more classes; and
compiling the new source code if necessary.

5. The method of claim 3, wherein updating the ontology objects to reflect the change to the metamodel comprises specifying behavior in the metamodel in terms of the ontology obj ects.

6. The method of claim 3, further comprising extending the metamodel by creating one or more user-defined methods to specify semantics, wherein the semantics are specified in terms of the ontology objects.

7. A metamodeling environment comprising:
a processor;
program logic stored in data storage and executable by a processor to:
provide an interface for creating and modifying at least one metamodel, wherein the metamodel comprises a plurality of entities and one or more relationship between the entities, and wherein the interface accepts user input to define the plurality of entities and the relationships between the entities; and
maintain a plurality of ontology objects, wherein the ontology objects correspond to the defined entities and describe the relationships between the entities.

8. The metamodeling environment of claim 7 further comprising program logic stored in data storage and executable by a processor to provide an interface for using ontology objects to create one or more instance models, and wherein maintaining the plurality of ontology objects comprises creating an ontology object whenever a new entity is defined for the metamodel.

9. The metamodeling environment of claim 8, wherein maintaining the plurality of ontology objects comprises updating the ontology objects whenever an entity is modified.

10. The metamodeling environment of claim 7, wherein the ontology objects comprise a plurality of classes, wherein each of the classes corresponds to a user-defined entity, wherein at least one of the classes comprises at least one instance variable that describes the relationships between the entities, wherein at least one of the defined entities comprises one or more attributes, and wherein a class corresponding to the defined entity comprises one or more instance variables corresponding to the one or more attributes.
